# DEMANDE DE BREVET EUROPEEN

(11) **EP 0 988 952 A1**
(43) Date de publication de la demande: **29.03.2000**
(21) Numéro de dépôt: 98870199.1
(22) Date de dépôt: 22.09.1998
(51) Int. Cl.: B29B 17/00, B29C 47/46, B29C 47/50, B29C 47/60

(54) **Procédé de recyclage d'une membrane et extrudeuse destinée à l'application du procédé**

(71) Demandeur: Performance Roof Systems S.A. en abrégé P.R.S., 1360 Perwez (BE)
(72) Inventeur: Macaluso, Nino, 1360 Perwez (BE); Garwig, Didier, 1360 Perwez (BE); Plevoets, Marc, 1360 Perwez (BE); Zwijsen, Michel, 1360 Perwez (BE); Menestrina, Guiseppe, 1360 Perwez (BE)
(74) Mandataire: Quintelier, Claude

(57) **Abrégé**

Procédé de recyclage d'une membrane bitumineuse comprenant au moins une nappe de fibres noyée dans une substance visqueuse, laquelle membrane est réduite en morceaux qui sont ensuite introduits dans une extrudeuse pourvue d'une vis d'extrusion, lesquels morceaux sont chauffés et soumis au mouvement de la vis d'extrusion afin de détruire ladite nappe et de rendre liquide la substance visqueuse, lesquels morceaux sont d'abord soumis au mouvement d'une première partie de la vis d'extrusion pourvue d'un premier pas de vis plus élevé que celui d'un deuxième pas de vis de la vis d'extrusion placé en aval du premier.

## Description

L'invention concerne un procédé de recyclage d'une membrane comprenant au moins une nappe de fibres noyée dans une substance visqueuse, laquelle membrane est réduite en morceaux qui sont ensuite introduits dans une extrudeuse pourvue d'une vis d'extrusion, lesquels morceaux sont chauffés et soumis au mouvement de la vis d'extrusion afin de rendre liquide la substance visqueuse.

L'invention concerne également une extrudeuse destinée à l'application du procédé.

Un tel procédé et une telle extrudeuse sont connus du brevet US 5.145.617. Dans le procédé connu des membranes en PVC pourvues d'une nappe de fibres en polyester sont recyclées à l'aide d'une extrudeuse. Avant d'introduire la membrane dans l'extrudeuse celle-ci est réduite en morceaux afin de ne pas bloquer le mouvement de l'extrudeuse par des morceaux trop grands. Sous l'effet du mouvement de rotation de la vis d'extrusion la nappe de fibres est détruite et les détritus de la nappe de fibres ou de l'armature dispersés dans la substance visqueuse rendue liquide sous l'effet de la friction de la vis d'extrusion et du chauffage. Ce mélange de substance visqueuse et détritus de la nappe est alors utilisé comme matière à extruder.

Un désavantage du procédé et de l'extrudeuse connus est que la destruction de la nappe de fibres est insuffisante pour son usage dans le recyclage de membranes bitumineuses utilisées pour le recouvrement de toitures. En effet la structure de la nappe de fibres est toujours présente dans la membrane déchiquetée et on la retrouve dans le liant bitumineux recyclé où elle constitue un polluant. Les fibres insuffisamment détruites laissent des lignes dans la membrane et forment un obstacle au liant produisant ainsi des points vulnérables dans la membrane.

L'invention a pour but de fournir une solution au problème susdit du recyclage des membranes bitumineuses permettant de détruire suffisamment la structure de la nappe de fibres.

A cette fin un procédé de recyclage d'une membrane suivant l'invention est caractérisé en ce que les morceaux proviennent d'une membrane bitumineuse et sont d'abord soumis au mouvement d'une première partie de la vis d'extrusion pourvue d'un premier pas de vis plus élevé que celui d'un deuxième pas de vis de la vis d'extrusion placé en aval du premier. L'usage d'au moins deux pas de vis différents dont le deuxième est plus élevé que le premier permet de déchiqueter la nappe de fibres de telle façon à ce que les détritus de fibres soient si petits qu'ils sont entièrement noyés dans la masse visqueuse que forme le liant bitumineux. Puisque le pas de vis plus élevé est placé en aval du premier plus petit, le liant bitumineux est déjà considérablement fondu avant d'atteindre le deuxième pas de vis libérant ainsi la nappe de fibres qui est alors soumise au cisaillement plus intense appliqué par le pas de vis plus élevé de la deuxième partie. Ainsi la deuxième partie cisaille la nappe et la détruit en si petits brins qu'ils ne sont plus apparents dans le liant bitumineux.

Une première forme préférentielle d'un procédé suivant l'invention est caractérisée en ce que dans leur parcours à travers l'extrudeuse les morceaux traversent en cascade au moins trois parties de l'extrudeuse, à chaque partie le pas de vis de l'extrudeuse est inférieur au précédent et à chaque partie est attribuée une plage de température pour le chauffage de l'étage respectif. L'usage d'au moins trois étages disposés en cascade permet un bon débit tout en évitant le blocage.

De préférence l'extrudeuse est alimentée de façon discontinue. On évite ainsi le blocage de la vis car le débit est limité par le pas de vis plus élevé de la deuxième partie.

Une première forme de réalisation préférentielle d'une extrudeuse suivant l'invention est caractérisée en ce qu'au moins une des parties est pourvue d'une vis d'extrusion à filets multiples. Les filets multiples permettent d'augmenter le débit sans nuire au cisaillement des fibres.

Une deuxième forme de réalisation préférentielle d'une extrudeuse suivant l'invention est caractérisée en ce qu'elle comporte des moyens de gestion de la vitesse de rotation de la vis d'extrusion agencés pour imposer à chaque partie une vitesse prédéterminée par partie. Ceci permet également d'augmenter le débit tout en évitant le blocage.

L'invention sera maintenant décrite plus en détails à l'aide des dessins reprenant des exemples de réalisation d'une extrudeuse suivant l'invention. Dans les dessins :
la figure 1 montre une vue d'ensemble d'une extrudeuse suivant l'invention;
la figure 2 montre une vue en coupe à travers l'extrudeuse de la figure 1;
la figure 3 montre un exemple d'une vis d'extrusion à plusieurs parties;
la figure 4 montre une vue en coupe longitudinale à travers une extrudeuse suivant l'invention; et
les figures 5a et 5b montrent une vue en coupe à travers une extrudeuse à deux vis superposées.

Dans les dessins une même référence a été attribuée à un même élément ou un élément analogue.

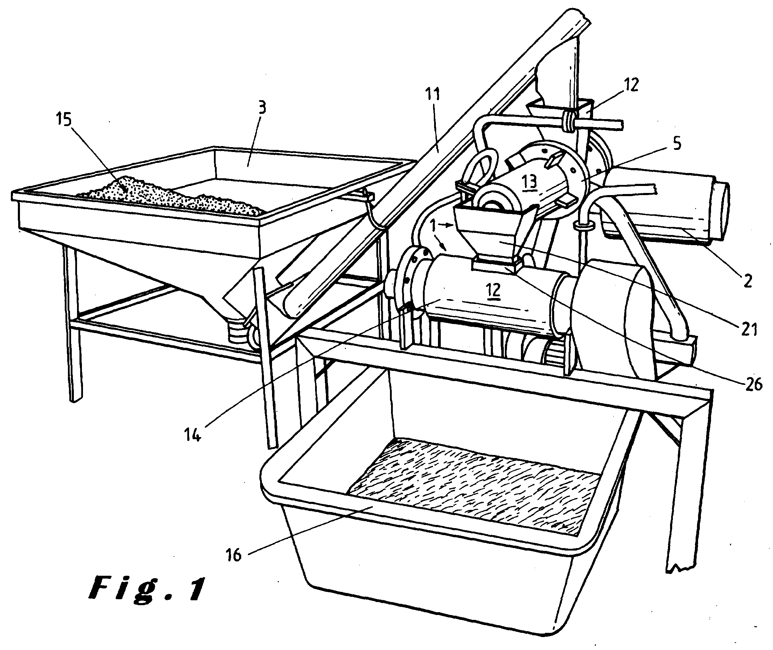

Dans l'exemple de réalisation illustré à la figure 1, l'extrudeuse 1 suivant l'invention comporte deux sections 13 et 14 disposées perpendiculairement l'une par rapport à l'autre. La première section 13 est placée au dessus de la deuxième section 14 de telle sorte que la sortie de la section 13 débouche juste au dessus de l'entrée de la section 14. Il sera clair qu'il s'agit là uniquement d'une forme de réalisation de l'extrudeuse suivant l'invention. D'autres formes de réalisation seront décrites ci-dessous. L'avantage d'utiliser des sections séparées réside dans le fait que chaque section peut être gérée indépendamment l'une de l'autre pour ce qui concerne la température et la vitesse de rotation. La température est gérée à l'aide de moyens de chauffage 5.

L'extrudeuse comporte également une trémie d'alimentation 3 reliée à l'entrée 12 de la section 13 à l'aide d'une conduite 11 pourvue d'une vis d'alimentation (non visible dans la figure). La ou les sorties de la deuxième section 14 débouche(nt) au dessus d'une cuve 16 dans laquelle est récupérée la substance visqueuse débitée par l'extrudeuse.

Un moteur 2 entraîne en rotation la vis d'extrusion placée dans le corps de l'extrudeuse. Dans l'exemple de réalisation repris à la figure 1 chaque section comporte son propre moteur ce qui permet d'entraîner les vis d'extrusion de chaque section à une vitesse de rotation différente. Suivant une autre forme de réalisation les deux vis peuvent être entraînées par un même moteur et la différence de vitesse est réalisée par démultiplication.

Les morceaux de membrane 15, le cas échéant préalablement découpés, sont versés dans la trémie 3. Le découpage préalable des bouts de membrane en morceaux dépend d'une part de la taille des bouts de membrane et d'autre part du profil de la vis d'extrusion à hauteur de l'entrée de la section 13. Une vis d'extrusion ayant un grand et profond pas de vis sera mieux à même de traiter des grands morceaux qu'une vis à pas petit et profondeur réduite.

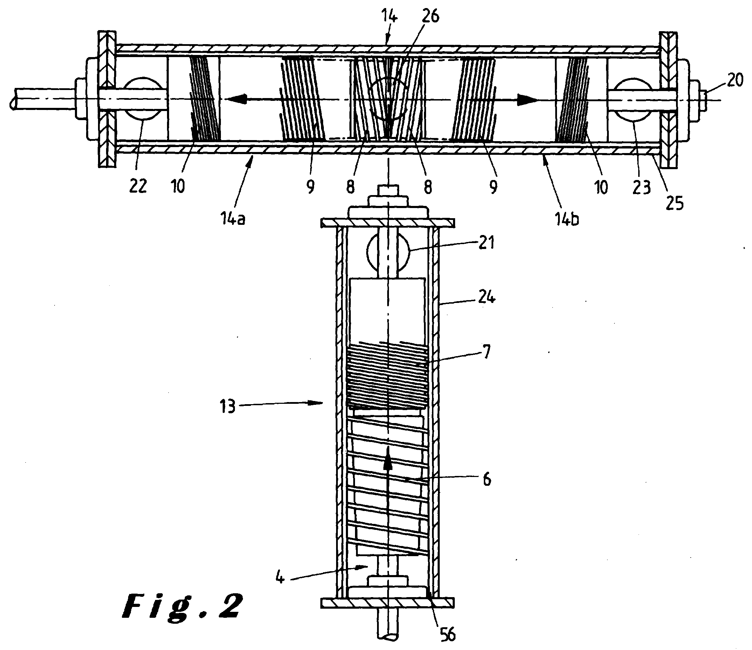

A partir de la trémie les morceaux sont transportés via la conduite 11 vers la première section afin d'y être traités. Comme illustré à la figure 2, la section 13 comporte une vis d'extrusion 4 logée dans le corps 24 de l'extrudeuse. La paroi du corps comporte une couche 26 dans laquelle circule un liquide de chauffage, par exemple de l'huile, permettant de chauffer le corps et donc les morceaux de membrane introduits dans le corps.

La vis d'extrusion 4 logée dans la première section comporte une première partie 6 et une deuxième partie 7 disposée en aval de la première dans la direction du mouvement imposé par la vis aux morceaux de membrane. Le pas de vis de la première partie 6 est plus élevé que celui de la deuxième partie. Dans l'exemple repris à la figure 2 le pas de vis de la première partie est 36 x 12 x 31 (distance entre deux filets successifs, profondeur, épaisseur du filet) alors que celui de la deuxième partie est de 10 x 10 x 10. Le pas de vis plus élevé de la première partie permet d'absorber les morceaux fournis à l'extrudeuse sans que leur dimension poserait immédiatement un problème de blocage de la vis. La chaleur fournie d'une part par le liquide qui circule dans la couche 56 et d'autre part par la friction entre les morceaux et la vis d'extrusion va faire fondre le liant bitumineux et produire une pâte qui sera transportée par le mouvement de rotation de la vis 4. La fonte du liant bitumineux va également libérer la nappe de fibres qui sera déjà en partie détruite par la première partie 6 de la vis et sera d'avantage détruite par le pas de vis inférieur de la seconde partie. Le fait que la deuxième partie possède une profondeur de vis moins élevée contribuera également à la destruction de la nappe de fibres présente dans la membrane. Le pas de vis moins élevé de la deuxième partie fera également augmenter la friction et donc fera fondre d'avantage le liant bitumineux.

Le pas de vis inférieur de la deuxième partie entraîne toutefois une réduction du débit. Pour remédier à ce problème la deuxième partie 7 est de préférence munie de plusieurs filets. Dans l'exemple repris à la figure 2, la vis d'extrusion comporte deux filets dans sa partie 7.

La première et deuxième partie de la vis d'extrusion sont soit construites en une seule pièce soit en deux modules juxtaposés. L'usage de modules permet de pouvoir plus facilement modifier la vis d'extrusion et permet également une fabrication plus simple.

Lorsque les morceaux de membrane soumis au mouvement de la vis d'extrusion atteignent la fin de la deuxième partie, ils tombent à travers une sortie 21 de la section 13 pour atteindre une entrée 26 de la section 14. Cette dernière section est composée de deux unités 14a et 14b sensiblement identiques et disposées de façon symétrique par rapport à l'entrée 26. Le sens du pas de vis de l'unité 14a est toutefois opposé à celui de l'unité 14b afin d'entraîner la vis d'extrusion logée dans le corps 25 à l'aide d'un même moteur. Le corps 25 est pourvu de deux sorties 22 et 23 disposées aux extrémités de l'extrudeuse.

Chaque unité 14a, 14b comporte une vis d'extrusion composée de plusieurs parties. Dans l'exemple repris à la figure 2 la vis d'extrusion comporte deux fois trois parties différentes, notamment une première partie 8 ayant un simple filet de 15 x 8 x 15, une deuxième 9 et troisième 10 partie de 5 x 3 x 10 et 2 x 2 x 2. La deuxième et troisième partie sont également à filets multiples notamment quatre pour la partie 9 et six pour la partie 10 afin d'augmenter le débit de l'extrudeuse.

Comme le montre l'exemple, les pas de vis diminuent de plus en plus que l'on s'approche des sorties 22 ou 23 et les filets se multiplient. La réduction du pas de vis va d'avantage détruire la nappe de fibres jusqu'à ce qu'il ne reste plus que des brins minuscules.

Dans le recyclage de membranes bitumineuses il est en effet important que la structure de la nappe de fibres soit détruite car elle forme un polluant dans le liant bitumineux à récupérer. En effet lorsqu'on utiliserait un tel liant bitumineux recyclé pour faire une nouvelle membrane bitumineuse ces agglomérats de fibres causeront des irrégularités dans la surface de la membrane ainsi produite. En défibrant la membrane à recycler on détruit la structure de la nappe de fibres et il n'y a plus de liaison entre les fibres qui sont maintenant finement éparpillées.

Le liant bitumineux ainsi recyclé quittera l'extrudeuse par les sorties 22 et 23 et sera récupéré dans la cuve 16. Une réinjection directe du liant bitumineux récupéré dans une substance bitumineuse destinée à fabriquer une nouvelle membrane peut également être envisagée.

Les granules introduits dans la trémie d'alimentation 3 sont alors entraînés par la rotation de la vis d'extrusion. Les granules sont introduits soit en continu soit de façon séquencée en fonction du débit de l'extrudeuse.

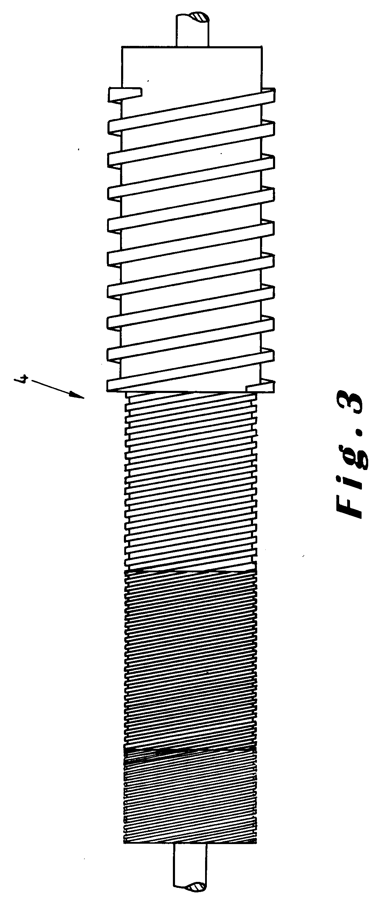

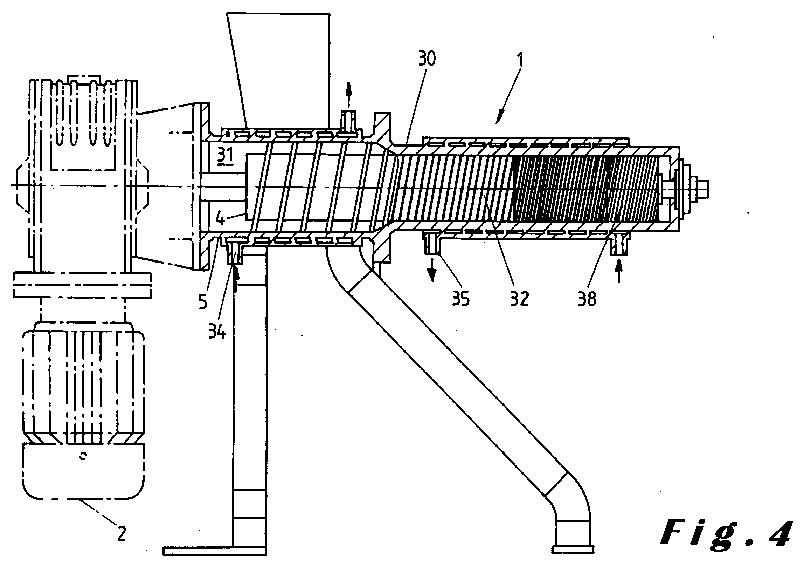

La figure 3 illustre un exemple d'une vis d'extrusion pourvue de quatre parties juxtaposées ayant chacune un pas de vis différent. De plus cette vis d'extrusion possède une première partie ayant un diamètre supérieur à celui des autres parties. Cette vis est destinée à être logée dans un corps 30 ayant une partie conique 31 comme illustré à la figure 4.

Le profil conique de la vis d'extrusion au passage de la zone d'alimentation à celle de compression provoque un effet d'entonnoir qui a pour conséquence d'exercer une pression sur la masse de liant bitumineux qui se trouve dans la zone d'alimentation. Cette masse est ainsi poussée vers la zone de compression. Les filets multiples dans la zone de compression ont pour effet de davantage casser la structure de la nappe de fibres. En particulier dans la première partie 32 de la zone de compression, le liant bitumineux va se liquéfier davantage libérant ainsi des restants de structure qui sont déchiquetés par les filets. Dans la deuxième partie 33 de la zone de compression, le filet plus fin de la vis d'extrusion va pour ainsi dire raffiner le liant bitumineux. Le cisaillement et la friction entre le filet et les granules ainsi que la rotation de la vis d'extrusion provoquent un effet mécanique sur le liant bitumineux qui est ainsi chauffé et se liquéfie davantage. De préférence, la vitesse de rotation de la vis d'extrusion est de 150 t/min. ce qui permet d'obtenir un bon débit sans provoquer des blocages de la rotation de la vis.

Comme également illustré à la figure 4, l'extrudeuse possède deux circuits de chauffage 34, 35. Les circuits 34 et 35 sont attribués à la partie 31 respectivement 32 et 33 de l'extrudeuse permettant ainsi une gestion de la température différente pour ces parties.

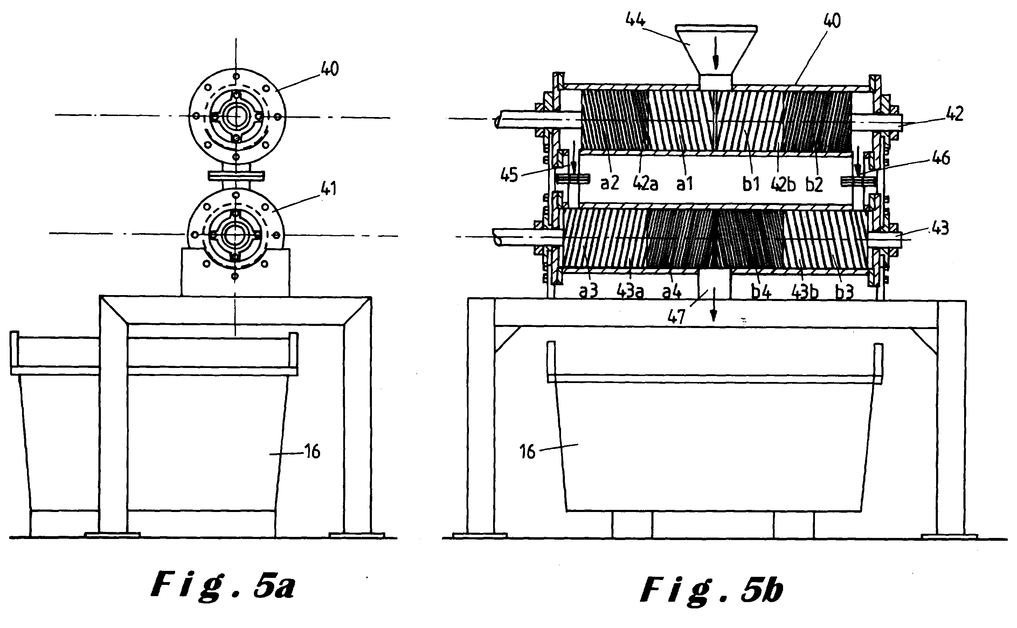

La figure 5 (a + b) montre un autre exemple de réalisation d'une extrudeuse suivant l'invention où deux corps 40, 41 ayant chacun une vis 42, 43 sont superposés. Les morceaux de membrane sont fournis à une entrée 44 de la première unité, qui comporte la vis 42 à deux unités 42 a et b ayant chacune deux sections (a1, a2, b1, b2) construites de façon analogue à celle illustrée à la figure 2, c'est-à-dire disposées de façon symétrique par rapport à l'entrée 44. La deuxième vis 43 comporte également deux unités 43a et b à deux sections disposées de façon symétrique par rapport à la ligne 45. Les pas de vis des différentes sections sont par exemple :

| | | |
|---|---|---|
| 42 a1, b1 | 25 x 20 x 12 | 1 filet |
| 42 a2, b2 | 10 x 5 x 10 | 4 filets |
| 43 a3, b3 | 10 x 10 x 10 | 2 filets |
| 43, a4, b4 | 2 x 2 x 2 | 6 filets |

Les morceaux traités par la première vis 42 quittent le corps par les sorties 45, 46 qui sont en relation directe avec tes entrées de la deuxième extrudeuse situées aux extrémités de celle-ci. Après avoir véhiculé à travers la deuxième extrudeuse la substance sort par la sortie 47 pour couler dans la cuve 16. Cette disposition à deux extrudeuses superposées permet d'augmenter le débit tout en ayant une largeur limitée.

## Revendications

1. Procédé de recyclage d'une membrane comprenant au moins une nappe de fibres noyée dans une substance visqueuse, laquelle membrane est réduite en morceaux qui sont ensuite introduits dans une extrudeuse pourvue d'une vis d'extrusion, lesquels morceaux sont chauffés et soumis au mouvement de la vis d'extrusion afin de détruire ladite nappe et de rendre liquide la substance visqueuse, caractérisé en ce que les morceaux proviennent d'une membrane bitumineuse et sont d'abord soumis au mouvement d'une première partie de la vis d'extrusion pourvue d'un premier pas de vis plus élevé que celui d'un deuxième pas de vis de la vis d'extrusion placé en aval du premier.

2. Procédé de recyclage suivant la revendication 1, caractérisé en ce que dans leur parcours à travers l'extrudeuse les morceaux traversent en cascade au moins trois parties de l'extrudeuse, à chaque partie le pas de vis de l'extrudeuse est inférieur au précédent et à chaque partie est attribuée une plage de température pour le chauffage de l'étage respectif.

3. Procédé de recyclage suivant la revendication 1 ou 2, caractérisé en ce que l'extrudeuse est alimentée de façon discontinue.

4. Extrudeuse destinée à l'application d'un procédé suivant la revendication 1, laquelle extrudeuse comporte une vis d'extrusion placée dans un corps cylindrique pourvu de moyens de chauffage, caractérisée en ce que l'extrudeuse comporte au moins une première et une deuxième partie placées en aval de la première et dont le pas de vis de la vis d'extrusion logée dans la première partie est supérieur à celui de la vis d'extrusion logée dans la deuxième partie.

5. Extrudeuse suivant la revendication 4, caractérisée en ce qu'au moins une des parties est pourvue d'une vis d'extrusion à filets multiples.

6. Extrudeuse suivant la revendication 4 ou 5, caractérisée en ce que les moyens de chauffage sont agencés pour appliquer à chaque partie une température déterminée par partie.

7. Extrudeuse suivant l'une des revendications 4 à 6, caractérisée en ce qu'elle comporte des moyens de gestion de la vitesse de rotation de la vis d'extrusion agencés pour imposer à chaque partie une vitesse prédéterminée par partie.
